Europäisches Patentamt

(19) European Patent Office    (11) Publication number: **0 038 213**
Office européen des brevets    **B1**

(12)    **EUROPEAN PATENT SPECIFICATION**

(45) Date of publication of the patent specification:    (51) Int. Cl.³: **A 01 G 9/24**
18.04.84

(21) Application number: **81301646.6**

(22) Date of filing: **14.04.81**

(54) **A system for the control of temperature and humidity within a greenhouse.**

(30) Priority: **15.04.80 GB 8012313**

(43) Date of publication of application:
**21.10.81 Bulletin 81/42**

(45) Publication of the grant of the patent:
**18.04.84 Bulletin 84/16**

(84) Designated Contracting States:
**AT BE CH DE FR IT LI LU NL SE**

(56) References cited:
**FR - A - 2 374 594**
**GB - A - 1 122 396**
**US - A - 3 913 344**

(73) Proprietor: **AGRI-PROJECTS INTERNATIONAL
LIMITED, P.O. Box 191 St. Julian's Court St. Julian's
Avenue, St. Peter Port Guernsey, Channel Islands (GB)**

(72) Inventor: **Morgan, Keith Edgar, 7 Hawthorn Way,
Sonning-on-Thames Berkshire (GB)**

(74) Representative: **Horton, Andrew Robert Grant et al,
BOULT, WADE & TENNANT 27 Furnival Street, London,
EC4A 1PQ (GB)**

## A System for the Control of the Temperature and Humidity within a Greenhouse

This invention relates to the control of the temperature and humidity inside a greenhouse by recovering and recycling heat energy and water. It is particularly intended for use with large, automatically controllable greenhouses in which flowers, vegetables or other plants are grown commercially but can also be used with other sealable structures in which plants are grown such as small greenhouses, conservatories and plastic tunnels, to provide heat energy (e.g. for domestic heating), distilled water or both.

Greenhouses which are used on a commercial scale usually require the provision of heating and ventilating and sometimes shading or heat removal equipment by means of which the temperature within the greenhouse may be maintained within prescribed limits appropriate for the plants within the greenhouse. In favourable climates or weather conditions, the cost of supplying supplementary heat to the greenhouse is slight, and by appropriate choice of times for heating or sealing the greenhouse the maintenance of appropriate conditions within it is neither difficult nor particularly costly. However, in variable or unpredictable climates or weather conditions, the use of a greenhouse is commercially less favourable and often unprofitable owing either to the large capital cost of equipment necessary for supplying, from an external source, heat to the greenhouse under the most unfavourable weather conditions or to the cost of running such equipment during prolonged periods of bad weather.

It happens that though plants in general use solar energy inefficiently for photosynthesis they, in general, use solar energy quite efficiently for transpirations—that is, the production of water vapour. It is, accordingly, feasible, by means of a heat pump which may be termed for convenience a refrigerative de-humidifier, to obtain from the extraction and condensation of water vapour from air within the greenhouse heat which may in part supplement or provide the whole of the heating which will normally be required for maintaining the temperature inside the greenhouse within prescribed limits. The condensation and extraction of this water vapour will also help to maintain the relative humidity of the air in the greenhouse within a prescribed range, which is essential for healthy growths of the plants. It has been proposed, in theory, to provide such a heat pump (called hereinafter simply heat pump) for these purposes, but as yet no system suitable for operation on a commercial scale has been produced.

It will be appreciated that the control of such a heat pump and also the control of other operations, such as sealing or venting the greenhouse, must depend, at least in part, on the prevailing weather conditions if an excessive reliance on supplementary heating or artificial cooling by refrigerative means or by evaporative cooling by means of sprays, mists and fogs, and by movable shading systems, are to be avoided. However, even if one considers only temperature and relative humidity as variables, one might suppose that there is such a multiplicity of different weather conditions that the organisation of a control system is not feasible.

The present invention provides an apparatus for the control of the temperature and humidity within a greenhouse by optimising the recovery, recycling and utilisation of heat and water, comprising means for sealing and venting the greenhouse, a heat pump including means capable of deriving heat energy and distilled water from the condensation of water vapour in air from either within or outside the greenhouse or both and of delivering heat energy to air, means for controlling the flow of air from inside or outside the greenhouse by way of the heat pump to inside or outside the greenhouse, means for deriving control signals indicating whether the said temperature and humidity are within respective prescribed ranges or not, means responsive to at least ambient temperature and humidity to provide indications of which out of a set of predetermined weather conditions exist and control logic which selects in response to the indicated weather condition and to the control signals a particular mode out of a plurality of predetermined modes of operation of the said air flow control means, heat pump, and sealing and venting means to maintain or tend to maintain the temperature and humidity inside the greenhouse within said ranges.

One of the features of the present invention is the presumption that conditions within a greenhouse may be presumed always to fall within one of a comparatively small number of different conditions. In practice, the particular condition may be ascertained according as the temperature and relative humidity within the greenhouse fall within respective prescribed limits or not. In a practical system, which will be described, this choice of criteria can be used to ascertain which of nine different predetermined conditions actually exists within the greenhouse.

Another feature of the invention is a presumption that the weather conditions, as represented by ambient temperature and ambient relative humidity, can be analysed to ascertain which, out of a comparatively small number of possible weather conditions, actually exists. In the example which will be described, and which requires also the measurement of one further parameter, the prevailing weather conditions may be determined as a particular one out of thirty-two possible predetermined conditions, since wind speeds are considered separately.

The reduction of a potential infinitude of conditions inside the greenhouse and weather conditions outside the greenhouse to a comparatively small set of predetermined conditions renders feasible the provision of control logic which can readily be programmed to select, for any

given condition within the greenhouse and any given weather condition outside the greenhouse, the appropriate mode of operation of the heat pump and other equipment so as to maintain the desired conditions inside the greenhouse. It will be understood that for any given weather conditions and condition within the greenhouse there may be more than one suitable mode of operation; moreover, there may be measurement of the actual disparity of a parameter of a condition within the greenhouse and the relevant prescribed limit for that parameter. It may in consequence be necessary or desirable for a given pair of conditions, that is to say a condition within the greenhouse and the ambient weather conditions, to result in the transition between different modes of operation as, for example, the afore-mentioned parameter approaches or recedes from the respective limit. Nevertheless, in principle the operation of the system would be the same.

There follows a more particular description of the invention, with reference to the accompanying drawings, of which—

Fig. 1 is a schematic illustration of a greenhouse and a control system for it; and

Fig. 2 illustrates schematically heat exchangers forming part of the system shown in Fig. 1.

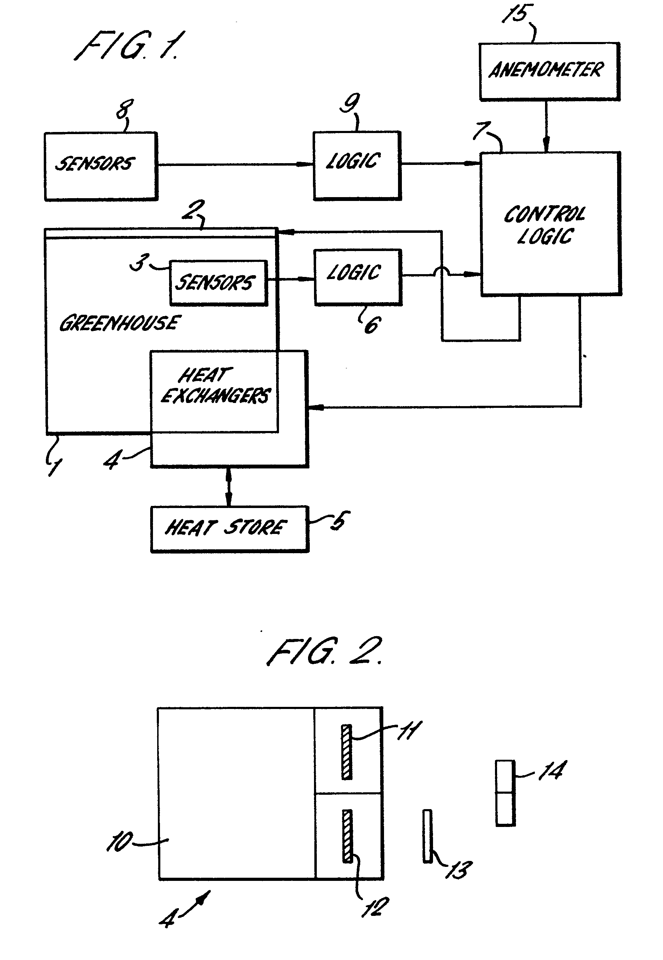

The system illustrated in Fig. 1 is given only by way of explanation, the divisions of the system into schematic blocks being made mainly for convenience of explanation. In the system is shown a greenhouse 1 which has venting and sealing means 2. The greenhouse includes sensors 3 which are adapted to sense temperature and relative humidity inside the greenhouse. Associated with the greenhouse is a system 4 of heat exchangers; the system is illustrated as being partly inside and partly outside the greenhouse for reasons which will be apparent later. There is, optionally but preferably, a heat store 5 which may be constituted by a water tank that normally works between 5°C and, for example, 50°C. The volume of water in the heat store may be varied, preferably by varying the depths of water in the store, to meet anticipated heat requirements while working between the temperatures stated. In other words, less water would be stored in summer or during a spell of warm weather. The heat store may be insulated by surrounding soil and have an insulated lid.

The sensors 3 are associated with logic to provide, as will be explained, signals indicating whether the temperature and humidity inside the greenhouse are within respective prescribed ranges or not. These signals are used within control logic organised in the manner described hereinafter. The complete system includes sensors 8 which include means for measuring the ambient temperature and ambient relative humidity and preferably include means for determining the presence or absence of sunshine. These sensors are associated with logic 9 to provide signals indicative of the particular weather condition to the control logic 7 which controls the venting and sealing means 2 and the heat exchanger system 4.

Wind sensors 15 may, in certain circumstances, for example in high winds, override or modify the controls operating venting and sealing systems.

In practice, the logic 6, 7 and 9 may be merged so as to constitute different, though in practice indistinguishable, parts of a data processor.

One possibility for organising the control of the heat pump system and the venting of the greenhouse is to provide for a multiplicity of control links between the various sensors and the devices that they must control. For example, the temperature within the greenhouse might be ascertained every 2 min and, if it is outside the set range, an entry might be made in a register. If a scan of the register determines that the register has five entries, or some other number which indicates that the temperature within the greenhouse did not momentarily only depart from the set range, further enquiry to determine whether the temperature is too low may result in an instruction to close the vent of the greenhouse, if it be determined that it is open. If, however, the vent be closed, then the control of the heat pump may be arranged to be dependent on various other enquiries of the state of the system, namely whether the relative humidity be above or below the economic minimum, whether the heat pump be in a latent to sensible heat mode, whether the backup heating system be on, whether the heat store be above or below the minimum economic temperature, whether the time be within 7 h or some other particular time of sunrise and so on. If, on the other hand, the temperature be too high, further similar enquiries may cause the reversal of the heat pump, the opening of the vents and other operations as desired. However, such an approach tends to be piecemeal and a more convenient approach to the problem is the analysis of the conditions within the greenhouse into one of a predetermined number, the analysis of the weather conditions to determine which of a predetermined number exists and the automatic choice of mode of operation of the system for each possible combination of weather condition and the conditions within the greenhouse.

It is preferred that the conditions within the greenhouse be analysed automatically, using in effect a logic tree which ascertains 1 whether the temperature in the greenhouse be within a set range; and (only if not) whether the temperature be too high or too low; (2) whether the relative humidity be below a set maximum; and (3) whether the relative humidity be below the set minimum. This tree of enquiries provides one of nine logic states according as the temperature be too high, too low or within the set range and the relative humidity be too high, too low or within the set range. For performing the relevant enquiries, instrumentation inside the greenhouse may determine the internal temperature relative humidity and compare their values with the desired ranges at, for example, 2-min intervals. The temperature, which may be sensed by thermocouples, may have a set range of, for example, 20 to 21°C. An ordinary humidity sensor may be used for determining the relative humidity.

The scheme mentioned immediately in the foregoing provides no indication of the size and rate of change of any error between the particular value of temperature or relative humidity and the relevant set range. However, by entering an indication of an actual measured value within a register during each scan, the rate of change and the sense of the change may readily be determined to provide proportional control if this be desired.

However, for simplicity, it will be supposed that there is no proportional control and that the control logic, at intervals such as 2 min, determines the internal condition of the greenhouse, entering a signal identifying it in a memory, determines the latest weather condition (as explained hereinafter), selects in accordance with a predetermined match of weather condition and internal condition the mode of operation of the various equipment to bring the temperature and humidity within the set ranges and provides for subsequent determination of the state of that equipment and the conditions prevailing within the greenhouse at, for example, 2-min intervals up to 10 min. If after that time a discrepancy from the set ranges of temperature and humidity still persists, an alarm may be sounded in order to permit an operator to take overriding action as may be necessary. For example, let it be supposed that a particular strategy or mode required for the relevant conditions inside and outside the greenhouse require the opening of vents, the operation of the heat pump in a particular mode, the deflation of inflatable panels for the greenhouse. Signals indicating that the devices are operating as desired may be entered in a register and, when there is a multiplicity, such as five, of entries in the register, showing that in spite of the apparently correct functioning of the equipment the error in temperature or relative humidity still persists, the alarm may be sounded and the entries in the register cancelled.

Various schemes may be adopted for the analysis of weather conditions. The analysis that follows is given by way of example.

In this analysis it is presumed that weather conditions fall within one of thirty-two classes. These classes are defined below, the definition being followed in each pair of classes, the classes in a pair differing from each other only according as there is sun or no sun, by remarks which indicate generally what the control strategy should be.

*Classes 1 and 2:* ambient temperature above a predetermined maximum, ambient relative humidity below a predetermined maximum, ambient relative humidity below the internal relative humidity. These conditions connote hot, dry weather, and cooling and sealing of the greenhouse will be required.

*Classes 3 and 4:* the ambient temperature is above the set maximum, the ambient relative humidity is below the said maximum, the ambient relative humidity is above the internal relative humidity. These conditions connote hot, dry weather, though wetter than the interior of the greenhouse, and the ambient conditions may provide a good source of heat for the heat store.

*Classes 5 and 6:* the ambient temperature is above the set maximum, the ambient relative humidity is above the set maximum, the ambient relative humidity is below the internal relative humidity. The weather is hot and humid but drier than the interior of the greenhouse.

*Classes 7 and 8:* the ambient temperature is above the set maximum, the ambient relative humidity is above the set maximum, the ambient relative humidity is above the internal relative humidity. The weather is hot and very humid.

*Classes 9 and 10:* the ambient temperature is within the set range, the ambient relative humidity is below the set maximum, the ambient relative humidity is below the internal relative humidity. The weather is warm and dry, and the air obtained from the atmosphere could be used directly to reduce the internal relative humidity.

*Classes 11 and 12:* the ambient temperature is within the set range, the ambient relative humidity is below the set maximum, and is above the internal relative humidity. The ambient air is warm and dry enough to use but is wetter than that inside the greenhouse. It may provide a good source of heat.

*Classes 13 and 14:* the ambient temperature is within the set range, the ambient relative humidity is above the set maximum, the ambient relative humidity is below the internal relative humidity. The atmosphere is warm, too wet to use as it is, but is drier than the interior.

*Classes 15 and 16:* the ambient temperature is within the set range, the ambient relative humidity is above the set maximum and above the internal relative humidity. The atmosphere is warm, too wet to use as it is, and wetter than the interior; it may be a good source of heat.

It is appropriate to mention at the present stage that a weather condition falling within the first eight classes indicates that the interior of the greenhouse will require cooling, though Classes 1, 3, 5, and 7 denote that there is solar gain. If the weather falls within any of Classes 9 to 16, the interior of the greenhouse can be brought to the set temperature by ventilation of the greenhouse. As may be presumed from the foregoing, Classes 9, 11, 13, and 15 denote the continuance of solar gain.

*Classes 17 and 18:* the ambient temperature is below the set range but above the internal temperature, the ambient relative humidity is below the set maximum and below the internal relative humidity. The weather is cool but warmer and drier than the interior of the greenhouse.

*Classes 19 and 20:* the ambient temperature is below the set range but above the temperature inside the greenhouse, the ambient relative humidity is below the set maximum but above the internal relative humidity. The atmosphere is cool though warmer than the interior of the greenhouse; it is dry enough to use but wetter than the interior.

*Classes 21 and 22:* the ambient temperature is below the set range but above the internal temperature, the ambient relative humidity is above the set maximum but below the internal relative humidity. The atmosphere is too wet to use as it is but is drier than the interior.

*Classes 23 and 24:* the ambient temperature is below the set range but above the internal temperature, the ambient relative humidity is above the set maximum and above the internal relative humidity. The atmosphere is cool, too wet to use; it is wetter than the interior and could be a source of latent heat.

If the weather conditions fall within Classes 17 to 24, the interior of the greenhouse is below the set temperature. Classes 17, 19, 21, and 23 indicate solar gain. Moreover, the ambient temperature is warmer than the interior but the interior of the greenhouse is too cold.

*Classes 25 and 26:* the ambient temperature is below the set range and below the internal temperature, the ambient relative humidity is below the set maximum and below the internal relative humidity. The atmosphere is cool and dry and is useful only for the reduction of the internal relative humidity.

*Classes 27 and 28:* the ambient temperature is below the set range and also below the internal temperature, the ambient relative humidity is below the set maximum but above the internal relative humidity. The atmosphere is cool, drier than the maximum but wetter than the interior.

*Classes 29 and 30:* the ambient temperature is below the set range and below the internal temperature, the ambient relative humidity is above the said maximum but below the internal relative humidity. The atmosphere is cool and too wet but is drier than the interior.

*Classes 31 and 32:* the temperature is below the set range but above the internal temperature, the ambient relative humidity is above the set maximum and above the internal relative humidity. The weather is cool and wet.

It will be noticed that which weather condition exists is defined with reference to the temperature and relative humidity of the atmosphere in relation to the particular range set and in relation to the temperature and relative humidity respectively inside the greenhouse. The particular weather condition that exists can therefore readily be identified by one of thirty-two different coded signals. When this signal is produced the conditions inside and outside the greenhouse have been determined for the purpose of control. To determine how the control may be exerted it is necessary to consider what modes of operation may be performed by the manipulation of the structure of the greenhouse and by the operation of the heat pump.

In the present example there are seventeen different modes of control of the heat pump or heat exchanging system. To understand these modes, reference should be made to Fig. 2, in which the numeral 10 indicates the interior of the greenhouse: the reference 11 denotes a first heat exchanger, which may be constituted by a fan and coil condenser, the reference 12 denotes a second heat exchanger, which may be constituted by a fan and coil evaporator, the reference 13 adds an external heat exchanger constituted by a fan and coil condenser and evaporator, and the reference 14 denotes a shell and tube heat exchanger, which may operate as a condenser or evaporator. It may be noted that the dual function which is presumed to be available for the heat exchangers 13 and 14 may not be permitted by virtue of restrictions imposed by the refrigerant circuit. In this event, the dual function of these two heat exchangers must be performed by a separate condenser and evaporator in each case.

It is intended that the heat pump constituted by the heat exchangers should have the following seventeen modes of operation of which the first sixteen are in groups of two, the operation of the heat exchangers being the same for each group of two but the air flow differing between the modes in each group of two.

The first mode, mode 1, requires heat exchangers 11 and 12 to be operative, and heat exchangers 13 and 14 to be inoperative. In mode 1 (*a*) air flows from the interior through heat exchanger 11 and thence through heat exchanger 12 and back to the interior of the greenhouse. Thus latent heat derived from air inside the greenhouse is converted to sensible heat. In mode 1 (*b*) internal air flows through heat exchanger 11 to the exterior and exterior air flows through heat exchanger 12 to the interior. Thus latent heat is converted to sensible heat.

In mode 2, heat exchangers 11 and 14 are operative, the latter in its condense mode. In mode 2 (*a*) interior air flows through heat exchanger 11 whereby interior latent heat is available and is pumped to heat exchanger 14 and thence to the heat store. In mode 2 (*b*) interior air flows to the exterior *via* heat exchanger 11 and exterior air flows through the (inoperative) heat exchanger 12 to the interior. Interior latent heat is pumped to the store *via* heat exchangers 11 and 14.

In mode 3, heat exchangers 11 and 12 are operative and heat exchanger 14 is operating in the condenser mode. In mode 3 (*a*) air flows from the interior through heat exchangers 11 and 12 and back to the interior, the latent heat derived from the interior air being converted to sensible heat for returned air and also being pumped to the store *via* heat exchanger 14. In mode 3 (*b*) interior air flows out through heat exchanger 11 and exterior air flows in through heat exchanger 12. Thus interior latent heat is converted to sensible heat but pumped to the store.

In mode 4, heat exchanger 12 is operative and heat exchanger 14 operates in its evaporative mode. In mode 4 (*a*) air flows from the inside of the greenhouse through heat exchanger 12 and back again whereas in mode 4 (*b*) internal air flows out through the inoperative heat exchanger 11 and exterior air flows in through the operative heat exchanger 12. In both modes heat from the store is pumped to the interior of the greenhouse.

In mode 5, heat exchangers 11 and 12 are operative and heat exchanger 14 is in its evaporative mode. In mode 5 (*a*) interior air flows through heat exchangers 11 and 12 and back to the interior of the greenhouse whereas in mode 5 (*b*) interior air flows to the exterior *via* the heat exchanger 11 and exterior air flows to the interior of the greenhouse *via* heat exchanger 12. In both modes latent heat is converted to sensible heat and applied to the air which is admitted or re-admitted to the greenhouse and is supplemented by heat from the store.

In mode 6, heat exchangers 11 and 12 are operative and heat exchangers 13 and 14 are inoperative. In mode 6 (*a*) exterior air flows through heat exchanger 11 and back to the exterior whereas interior air flows through heat exchanger 12 and back to the interior. In mode 6 (*b*) atmospheric air flows through heat exchanger 12 and back to the exterior whereas exterior air also flows into the interior *via* heat exchanger 12.

In mode 7, heat exchangers 11, 12, and 13 only are operative. In mode 7 (*a*) air flows from the interior through heat exchangers 11 and 12 to the interior whereas in mode 7 (*b*) air flows from the interior out through heat exchanger 11 and exterior air flows in through heat exchanger 12.

In mode 8, heat exchangers 11 and 12 are operative: in mode 8 (*a*) interior air flows through heat exchanger 11 and back to the interior whereas exterior air flows through heat exchanger 12 and back to the exterior, whereas in mode 8 (*b*) interior air flows through heat exchangers 11 and 12 to the atmosphere.

Finally, in mode 9, heat exchangers 11 and 12 are operative and atmospheric air flows through heat exchanger 11, then through heat exchanger 12 to the interior of the greenhouse. In this manner air from the atmosphere is dried, re-heated, and admitted to the greenhouse.

Apart from the modes which are essentially different modes of operation of the heat pump, additional modes of operation may be provided, as mentioned by manipulation of the structure of the greenhouse and, furthermore, by what may be termed "last resort" techniques, such as heating by a backup heating system, cooling by sprinklers and such like.

The final stage in organising the control system requires a match of the internal and external conditions. The following may serve as an example.

Let it be supposed that internal condition 1 exists: the interior is too cold and too humid. If weather condition 1, 2, 9, or 10 exists, and on the presumption that the wind speed does not prohibit the ventilation of the greenhouse, the correct strategy is the ventilation of the greenhouse, the running of the venting fan at full speed, and the deflation of panels if they are inflated until conditions come within the set range. Then the greenhouse must be sealed and the panels inflated to prevent overheating and possible over-drying. A second example is that internal condition 1 exists and weather condition 31 exists. Then the vent of the greenhouse must be closed and the heat pump runs in mode 1. The selection between modes 1 (*a*) and 1 (*b*) is dependent on the relative temperatures of ambient air and air coming from the evaporator coil. If the conditions are not brought within the set ranges, the control logic must move to switch on the backup heating system and, if necessary, to inflate the panels. If these procedures are not effective, the alarm will be sounded.

A third example is that internal condition 1 exists and weather condition 32 exists. In this case the panels will already be inflated; if the heat pump runs in mode 1 (*a*) or 1 (*b*) the internal relative humidity will be reduced to below the set maximum and accordingly the control logic must alter the mode of operation of the heat pump to mode 5 or 7 and thence to mode 4 or 6.

It is convenient, finally, to summarise the sources of heat for the heat pump and the destinations of heat which is rejected. The sources comprises (*a*) interior air, *via* the exchanger 11, (*b*) the heat store, *via* the exchanger 14, (*c*) the atmosphere, *via* exchanger 13. Heat source (*a*) is exploited in modes 1, 2, 3, 5, 6, 7, and 8, the heat source (*b*) is utilised in modes 4 and 5 and heat source (*c*) in modes 6 and 7. Mode 9 also provides a heat source from the atmosphere *via* exchanger 11. The sources (*a*) and (*b*) may be combined and proportioned by water flow to heat exchanger 14 *via* a thermostatically controlled valve in mode 5. Moreover, sources (*a*) and (*c*): they may be proportioned by means of appropriate operation of the fans for the heat exchangers or an air-throttling flap valve in mode 7. It should also be noted that mode 1 should normally be followed by modes 3 and 2, that mode 2 will change *via* mode 3 to mode 1, mode 4 will change to mode 5, mode 5 will change to mode 4, mode 6 will change to mode 7 and vice versa.

## Claim

An apparatus for the control of the temperature and humidity within a greenhouse (1) by optimising the recovery, recycling and utilisation of heat and water, comprising means (2) for sealing and venting the greenhouse, a heat pump including means (4) capable of deriving heat energy and distilled water from the condensation of water vapour in air from either within or outside the greenhouse or both and of delivering heat energy to air, means (11, 12, 13, 14) for controlling the flow of air from inside or outside the greenhouse by way of the heat pump to inside or outside the greenhouse, means (3) for deriving control signals indicating whether the said temperature and humidity are within respective prescribed ranges or not, means (8) responsive to at least ambient temperature and humidity to provide indications of which out of a set of predetermined weather conditions exist and control logic (7) which selects in response to the indicated weather condition and to the control signals a particular mode out of a plurality of predetermined modes of operation of the said air flow control means, heat pump, and sealing and venting means to maintain or tend to maintain the temperature and humidity inside the greenhouse within said ranges.

## Patentanspruch

Vorrichtung zum Steuern der Temperatur und Feuchtigkeit in einem Gewächshaus (1) durch Optimierung der Wiedergewinnung, Rezyklierung und Nutzung von Wärme und Wasser, bestehend aus Mitteln (2) zum Abdichten und Lüften des Gewächshauses, einer Wärmepumpe mit Mitteln (4) zum Gewinnen von Wärmeenergie und destilliertem Wasser aus der Kondensation von Wasserdampf in Luft von innerhalb und/oder ausserhalb des Gewächshauses und zur Abgabe von Wärmeenergie an Luft, Mitteln (11, 12, 13, 14) zum Steuern des Luftstroms von innerhalb oder ausserhalb des Gewächshauses durch die Wärmepumpe nach dem Innern oder der Aussenseite des Gewächshauses, Mitteln (3) zum Gewinnen von Steuersignalen, die anzeigen, ob die genannte Temperatur und Feuchtigkeit innerhalb vorgeschriebener Bereiche liegen oder nicht, auf mindestens die Umgebungstemperatur und -feuchtigkeit ansprechende Mittel (8) zum Anzeigen, welche Wetterbedingungen aus einem vorgegebenen Satz von Wetterbedingungen vorhanden sind, und einer Steuerlogik (7), die in Abhängigkeit von den angezeigten Wetterbedingungen und den Steuersignalen eine bestimmte Betriebsweise aus einer Vielzahl von vorgegebenen Betriebsweisen der Luftstromsteuermittel, der Wärmepumpe und der Abdicht- und Lüftungsmittel auswählt, um die Temperatur und Feuchtigkeit im Gewächshaus innerhalb der genannten Bereiche zu halten oder das Halten in diesen Bereichen anzustreben.

## Revendication

Un appareil pour le réglage de la température et de l'humidité à l'intérieur d'une serre (1) par optimisation de la récupération, du recyclage et de l'utilisation de la chaleur et de l'eau, comprenant un moyen (2) pour rendre étanche la serre vis-à-vis de l'atmosphère et pour la mettre en communication avec l'atmosphère, une pompe à chaleur comprenant un moyen (4) pouvant extraire de l'énergie thermique et de l'eau distillée par condensation de la vapeur d'eau de l'air de l'intérieur et/ou de l'extérieur de la serre et céder de l'énergie thermique à l'air, un moyen (11, 12, 13, 14) pour commander, à l'aide de la pompe à chaleur, le débit de l'air s'écoulant de l'intérieur vers l'extérieur ou de l'extérieur vers l'intérieur de la serre, un moyen (3) pour fournir des signaux de commande indiquant si, oui ou non, ladite température et ladite humidité se trouvent dans des limites prescrites respectives, un moyen (8) sensible à au moins la température et à l'humidité ambiante pour indiquer quelle est la condition météorologique régnante parmi un ensemble de conditions météorologiques prédéterminées, et une logique de commande (7) qui choisit, en réponse à la condition météorologique indiquée et aux signaux de commande, un mode de fonctionnement particulier parmi une pluralité de modes de fonctionnement prédéterminés dudit moyen de commande de débit, de ladite pompe à chaleur et dudit moyen pour rendre étanche la serre vis-à-vis de l'atmosphère et pour la faire communiquer avec l'atmosphère, cela de manière à maintenir ou à tendre à maintenir la température et l'humidité dans la serre à l'intérieur desdites limites.

**FIG. 1.**

**FIG. 2.**